(19) Europäisches Patentamt
European Patent Office
Office européen des brevets

(11) EP 4 357 414 A1

(12) EUROPEAN PATENT APPLICATION
published in accordance with Art. 153(4) EPC

(43) Date of publication:
**24.04.2024 Bulletin 2024/17**

(21) Application number: **22824829.0**

(22) Date of filing: **03.06.2022**

(51) International Patent Classification (IPC):
***C08L 27/12*** (2006.01) ***C08K 5/1545*** (2006.01)
***C09K 3/10*** (2006.01)

(52) Cooperative Patent Classification (CPC):
**C08K 5/1545; C08L 27/12; C09K 3/10**

(86) International application number:
**PCT/JP2022/022642**

(87) International publication number:
**WO 2022/264837 (22.12.2022 Gazette 2022/51)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.06.2021 JP 2021100217**

(71) Applicant: **DAIKIN INDUSTRIES, LTD.**
**Osaka-Shi, Osaka 530-0001 (JP)**

(72) Inventors:
- **KAWASAKI, Kazuyoshi**
  **Osaka-shi, Osaka 530-0001 (JP)**
- **TAKEMURA, Kouhei**
  **Osaka-shi, Osaka 530-0001 (JP)**

(74) Representative: **Hoffmann Eitle**
**Patent- und Rechtsanwälte PartmbB**
**Arabellastraße 30**
**81925 München (DE)**

# (54) COMPOSITION FOR FLUORINE RUBBER CROSSLINKING, MOLDED PRODUCT, AND SEALING MATERIAL

(57) Provided is a fluoroelastomer crosslinkable composition, containing a polyol-crosslinkable fluoroelastomer (a) and a cross-linking agent (b), wherein the cross-linking agent (b) is at least one selected from the group consisting of a compound represented by the general formula (b) set forth in the description and a salt of the compound with an alkali metal, an alkaline earth metal, or an onium compound.

EP 4 357 414 A1

## Description

TECHNICAL FIELD

The present disclosure relates to a fluoroelastomer crosslinkable composition, a formed article, and a sealing material.

BACKGROUND ART

Patent Document 1 discloses, as an essential component in the final curable composition, an aromatic polyhydroxy compound capable of acting as a cross-linking agent or an auxiliary curing agent for a fluorinated elastomer.

Patent Document 2 discloses a composition comprising a fluorocarbon elastomer gum, a fluoroaliphatic sulfonamide as a curing agent therefor, and a second curing agent selected from the group consisting of polyhydroxy compounds, polyamine compounds, and derivatives thereof.

Patent Document 3 discloses a composition comprising fluorocarbon elastomer gum and a vulcanizing agent therefor, wherein the vulcanizing agent is a composition comprising one or a mixture of aromatic compounds having hydroxyl and oxyallyl groups directly bonded to aromatic ring-carbon atoms.

Patent Document 4 discloses a composition for fluoroelastomer vulcanizing, comprising (a) a fluorine-containing elastomer, (b) one or more substances selected from the group consisting of divalent metal oxides, divalent metal hydroxides and mixtures of these metal oxides or metal hydroxides with metal salts of weak acids, (c) a polyhydroxyaromatic compound, and (d) a specific vulcanization accelerator.

Patent Document 5 discloses a vulcanizable composition comprising: (A) a copolymer containing polymerized vinylidene fluoride unit, and polymerized hexafluoropropylene unit, or polymerized chlorotrifluoroethylene unit, or polymerized 1-hydropentafluoropropylene unit or polymerized 2-hydropentafluoropropylene unit; (B) a quaternary phosphonium or quaternary ammonium vulcanization accelerator; (C) a cross-linking agent selected from the group consisting of a dihydroxy-, trihydroxy-, and tetrahydroxy-benzene having one aromatic ring, -naphthalene, and -anthracene, and a bisphenol represented by the following formula:

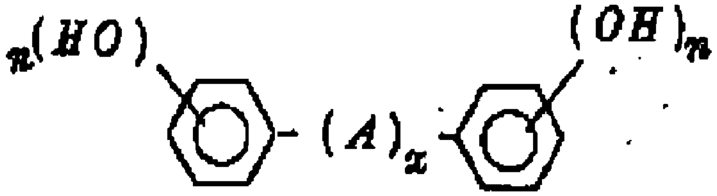

wherein A is a bifunctional group, X is 0 or 1, and n is 1 or 2; (D) a polyol co-accelerator selected from the group consisting of pentaerythritol, 2,2-dimethyl-1,3-propanediol, dipentaerythritol, and trimethylolpropane; and (E) a metal compound selected from the group consisting of a divalent metal oxide, a divalent metal hydroxide, and a mixture of such an oxide and a hydroxide with a metal salt of a weak acid, wherein the composition contains about 0.2 to 2 parts by weight of the component (B), about 0.5 to 4 parts of the component (C), about 0.05 to 4 parts of the component (D), and about 0.5 to 30 parts of the component (E), per 100 parts by weight of the component A.

Patent Document 6 discloses a curable fluoroelastomer composition characterized by comprising: A) a special fluoroelastomer containing copolymer units of 45% by weight to 80% by weight of tetrafluoroethylene, 10% by weight to 40% by weight of propylene, and 0.1% by weight to 15% by weight of a cure site monomer selected from the group consisting of i) trifluoroethylene, ii) 3,3,3-trifluoropropene-1, iii) 1,2,3,3,3-pentafluoropropylene, iv) 1,1,3,3,3-pentafluoropropylene, and v) 2,3,3,3-tetrafluoropropene; B) 0.1 parts by weight to 20 parts by weight of a polyhydroxy curing agent based on 100 parts of the fluoroelastomer; C) 1 part by weight to 30 parts by weight of an acid acceptor based on 100 parts of the fluoroelastomer; and D) 0.1 parts by weight to 20 parts by weight of a vulcanization accelerator based on 100 parts of the fluoroelastomer.

RELATED ART

PATENT DOCUMENTS

Patent Document 1: Japanese Patent Publication No. 64-418

Patent Document 2: Japanese Patent Laid-Open No. 60-215042
Patent Document 3: Japanese Patent Laid-Open No. 59-105046
Patent Document 4: Japanese Patent Laid-Open No. 63-268757
Patent Document 5: Japanese Patent Laid-Open No. 59-206451
Patent Document 6: International Publication No. WO 2002/092683

## SUMMARY OF THE INVENTION

## PROBLEM TO BE SOLVED BY THE INVENTION

An object of the present disclosure is to provide a fluoroelastomer crosslinkable composition capable of providing a formed article with excellent heat resistance.

## MEANS FOR SOLVING THE PROBLEM

The present disclosure provides a fluoroelastomer crosslinkable composition comprising: a polyol-crosslinkable fluoroelastomer (a); and a cross-linking agent (b), wherein the cross-linking agent (b) is at least one selected from the group consisting of a compound represented by the following general formula (b) and a salt of the compound with an alkali metal, an alkaline earth metal, or an onium compound.

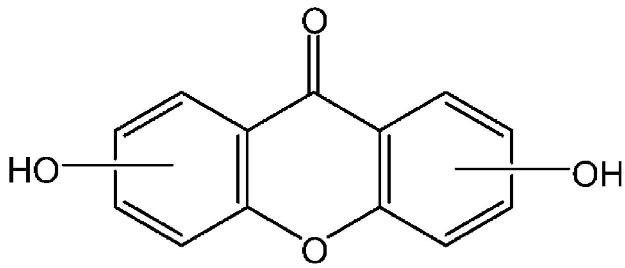
(b)

wherein hydrogen atom bonded to two benzene rings is optionally replaced with any substituent.
In the fluoroelastomer crosslinkable composition of the present disclosure, the fluoroelastomer (a) preferably comprises vinylidene fluoride unit.
In the fluoroelastomer crosslinkable composition of the present disclosure, a content of the cross-linking agent (b) is preferably 0.5 to 50 mmol based on 100 parts by mass of the fluoroelastomer (a).
In the fluoroelastomer crosslinkable composition of the present disclosure, the cross-linking agent (b) preferably comprises a salt of the compound represented by the general formula (b) with an onium compound, or the fluoroelastomer crosslinkable composition of the present disclosure preferably comprises a crosslinking accelerator.
The fluoroelastomer crosslinkable composition of the present disclosure preferably further contains 0.1 to 50 parts by mass of an acid acceptor (d) based on 100 parts by mass of the fluoroelastomer (a).
The fluoroelastomer crosslinkable composition of the present disclosure preferably further contains at least one acid acceptor (d) selected from the group consisting of a metal oxide, a metal hydroxide, an alkali metal silicate, a metal salt of a weak acid, and a hydrotalcite.
In the fluoroelastomer crosslinkable composition of the present disclosure, the cross-linking agent (b) is preferably at least one selected from the group consisting of a compound represented by the following general formula (b1) and a salt of the compound represented by the general formula (b1) with an alkali metal, an alkaline earth metal, or an onium compound.

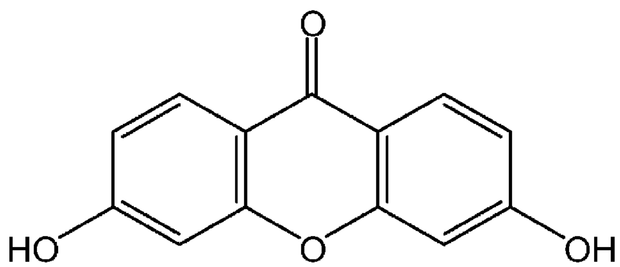
(b1)

The fluoroelastomer crosslinkable composition of the present disclosure can suitably be used for forming a sealing material.

The present disclosure also provides a formed article or a sealing material obtained from the fluoroelastomer crosslinkable composition.

EFFECTS OF INVENTION

According to the present disclosure, a fluoroelastomer crosslinkable composition can be provided that is capable of providing a formed article with excellent heat resistance.

DESCRIPTION OF EMBODIMENTS

Hereinafter, specific embodiments of the present disclosure will now be described in detail, but the present disclosure is not limited to the following embodiments.

A fluoroelastomer crosslinkable composition of the present disclosure contains a polyol-crosslinkable fluoroelastomer (a) and a cross-linking agent (b).

Patent Document 1 discloses that, with respect to any known aromatic polyhydroxy compounds that can act as a cross-linking agent or an auxiliary curing agent, one of the most useful aromatic polyphenols is a bisphenol compound, hexafluoroisopropylidene-bis(4-hydroxybenzene), known as bisphenol AF. Patent Documents 2 to 6 also disclose polyhydroxy compounds as examples of a cross-linking agent or a curing agent. The present inventors have found not only that a polyhydroxy compound, which has not been known to function as a cross-linking agent for a polyol-crosslinkable fluoroelastomer, can function as a cross-linking agent for a polyol-crosslinkable fluoroelastomer but also that the use of such a cross-linking agent makes it possible to obtain a formed article that has excellent heat resistance, as compared to a case where a conventional cross-linking agent such as bisphenol AF is used. The fluoroelastomer crosslinkable composition of the present disclosure has been completed on the basis of these findings.

Hereinafter, each component of the fluoroelastomer crosslinkable composition of the present disclosure will be described.

(a) Polyol-crosslinkable fluoroelastomer

A polyol-crosslinkable fluoroelastomer used in the present disclosure is a fluoroelastomer having a polyol-crosslinkable site. Herein, the fluoroelastomer is an amorphous fluoropolymer. Being "amorphous" means that the magnitude of a melting peak ($\Delta H$) appearing in differential scanning calorimetry (DSC) (temperature-increasing rate 20°C/min) or differential thermal analysis (DTA) (temperature-increasing rate 20°C/min) of the fluoropolymer is 4.5 J/g or less. The fluoroelastomer exhibits elastomeric characteristics by being crosslinked. Elastomeric characteristics mean such characteristics that the polymer can be stretched, and retain its original length when the force required to stretch the polymer is no longer applied.

The polyol-crosslinkable site may be a site having vinylidene fluoride (VDF) unit. Among fluoroelastomers, a fluoroelastomer containing VdF unit is preferable because the effect of using the cross-linking agent (b) is easily demonstrated.

The fluoroelastomer having a polyol-crosslinkable site may be a non-perfluoro fluoroelastomer or a fluoroelastomer containing $-CH_2-$ (methylene group) in the main chain. The fluoroelastomer having a polyol-crosslinkable site may be, for example, a vinylidene fluoride (VDF)-based fluoroelastomer having substantially no polar end groups disclosed in Japanese Patent Laid-Open No. 2003-277563, a vinylidene fluoride-based fluoroelastomer disclosed in Japanese Translation of PCT International Application Publication No. 2018-527449 and containing repeating units derived from vinylidene fluoride (VDF) and repeating units derived from at least one additional (per)fluorinated monomer, or 100 parts (phr) of a curable fluoroelastomer disclosed in Japanese Patent Laid-Open No. 7-316377, having a low fluorine content of less than 67% by weight, and comprising from 40 to 68% by weight of vinylidene fluoride (VDF) unit and from 20 to 50% by weight of hexafluoropropylene (HFP) unit, the sum being 100, and optionally one or more comonomers having ethylene unsaturation.

The fluoroelastomer having a polyol-crosslinkable site may be a VdF-based fluoroelastomer or an elastomer having a polyol-crosslinkable functional site in the side chain and/or the main chain. Examples of the VdF-based fluoroelastomer include tetrafluoroethylene (TFE)/propylene/VdF-based fluoroelastomer, ethylene/hexafluoropropylene (HFP)/VdF-based fluoroelastomer, VdF/HFP-based fluoroelastomer, and VdF/TFE/HFP-based fluoroelastomer. These fluoroelastomers having a polyol-crosslinkable site may be used singly or in any combination thereof without impairing the effects of the present disclosure.

The VdF-based fluoroelastomer is preferably one represented by the following general formula (1).

$-(M^1)-(M^2)-(N^1)-$ (1)

wherein the structural unit $M^1$ is a structural unit originated from vinylidene fluoride ($m^1$); the structural unit $M^2$ is a structural unit derived from a fluorine-containing ethylenic monomer ($m^2$); and the structural unit $N^1$ is a repeating unit originated from a monomer ($n^1$) copolymerizable with the monomer ($m^1$) and the monomer ($m^2$).

Among the VdF-based fluoroelastomers represented by the general formula (1), preferred are those containing 30 to 85% by mol of the structural unit $M^1$ and 55 to 15% by mol of the structural unit $M^2$, and more preferred are those containing 50 to 80% by mol of the structural unit $M^1$ and 50 to 20% by mol of the structural unit $M^2$. The amount of the structural unit $N^1$ is preferably 0 to 20% by mol based on the total amount of the structural unit $M^1$ and the structural unit $M^2$.

As the fluorine-containing ethylenic monomer ($m^2$), one or two or more kinds of the monomers can be utilized; and examples thereof include TFE, chlorotrifluoroethylene (CTFE), trifluoroethylene, HFP, trifluoropropylene, tetrafluoropropylene, pentafluoropropylene, trifluorobutene, tetrafluoroisobutene, perfluoro(alkyl vinyl ether) (PAVE), fluorine-containing monomers represented by the general formula (2):

$CF_2=CFO(Rf^1O)_q(Rf^2O)_rRf^3$ (2)

wherein $Rf^1$ and $Rf^2$ are each independently a linear or branched perfluoroalkylene group having 1 to 6 carbon atoms; $Rf^3$ is a linear or branched perfluoroalkyl group having 1 to 6 carbon atoms; and q and r are each independently an integer of 0 to 6 (provided $0 < q + r \leq 6$), fluorine-containing monomers represented by the general formula (3):

$CHX^{11}=CX^{12}Rf^4$ (3)

wherein one of $X^{11}$ and $X^{12}$ is H and the other thereof is F; and $Rf^4$ is a linear or branched fluoroalkyl group having 1 to 12 carbon atoms, and fluorine-containing monomers such as vinyl fluoride; but among these, TFE, HFP and PAVE are preferable.

The monomer ($n^1$) may be any one as long as being copolymerizable with the monomer ($m^1$) and the monomer ($m^2$), and examples thereof include ethylene, propylene, alkyl vinyl ethers, monomers providing a crosslinking site, and bisolefin compounds. These may be used singly or in any combination.

Such a monomer providing a crosslinking site may be an iodine- or bromine-containing monomer represented by the general formula (4):

$CY^1_2=CY^1-Rf^5CHR^1X^1$ (4)

wherein $Y^1$s are each independently a hydrogen atom, a fluorine atom, or $-CH_3$; $Rf^5$ is a fluoroalkylene group, a perfluoroalkylene group, a fluoropolyoxyalkylene group, or a perfluoropolyoxyalkylene group; $R^1$ is a hydrogen atom or $-CH_3$; and $X^1$ is an iodine atom or a bromine atom, a monomer represented by the general formula (5):

$CF_2=CFO(CF_2CF(CF_3)O)_m(CF_2)_n-X^2$ (5)

wherein m is an integer of 0 to 5, and n is an integer of 1 to 3; and $X^2$ is a cyano group, a carboxyl group, an alkoxycarbonyl group, a bromine atom, or an iodine atom, or a monomer represented by the general formula (6):

$CH_2=CH(CF_2)_pI$ (6)

wherein p is an integer of 1 to 10, and examples thereof include iodine-containing monomers such as perfluoro(6,6-dihydro-6-iodo-3-oxa-1-hexane) and perfluoro(5-iodo-3-oxa-1-pentene) disclosed in Japanese Patent Publication No. 5-63482 and Japanese Patent Laid-Open No. 7-316234, iodine-containing monomers such as $CF_2=CFOCF_2CF_2CH_2I$ disclosed in Japanese Patent Laid-Open No. 4-217936, iodine-containing monomers such as 4-iodo-3,3,4,4-tetrafluoro-1-butene disclosed in Japanese Patent Laid-Open No. 61-55138, a bromine-containing monomer disclosed in Japanese Patent Laid-Open No. 4-505341, and cyano group-containing monomers, carboxyl group-containing monomers, and alkoxycarbonyl group-containing monomers disclosed in Japanese Patent Laid-Open No. 4-505345 and Japanese Patent Laid-Open No. 5-500070. These may be used singly or in any combination.

The bisolefin compound may be one disclosed in Japanese Patent Laid-Open No. 8-12726.

Specific and preferred examples of the VdF-based fluoroelastomer include VdF/HFP-based elastomer, VdF/HFP/TFE-based elastomer, VdF/TFE/PAVE-based fluoroelastomer, VdF/CTFE-based elastomer, and VdF/CTFE/TFE-based elastomer.

Examples of the elastomer having a polyol-crosslinkable functional site in a side chain and/or a main chain include an elastomer constituted by copolymer units comprising tetrafluoroethylene (TFE)/a perfluoro(alkyl vinyl ether)

(PAVE)/a cure site monomer represented by $R^1CH=CR^2R^3$ (wherein $R^1$ and $R^2$ are independently selected from hydrogen and fluorine, and $R^3$ is independently selected from hydrogen, fluorine, an alkyl, and a perfluoroalkyl), and an elastomer having double bonds in a side chain and/or a main chain, as described in Japanese Patent Laid-Open No. 60-44511 or Japanese Patent No. 3890630.

Among these, the polyol-crosslinkable fluoroelastomer is preferably a fluoroelastomer composed of VdF and at least one other fluorine-containing monomer, particularly preferably at least one elastomer selected from the group consisting of VdF/HFP-based fluoroelastomer, VdF/TFE/HFP-based fluoroelastomer, and VdF/TFE/PAVE-based fluoroelastomer, and more preferably at least one elastomer selected from the group consisting of VdF/HFP-based fluoroelastomer and VdF/TFE/HFP-based fluoroelastomer.

The Mooney viscosity (ML 1+10(121°C)) at 121°C of the fluoroelastomer is preferably 1 or higher, more preferably 3 or higher, still more preferably 5 or higher, and particularly preferably 10 or higher; and is preferably 200 or lower, more preferably 170 or lower, still more preferably 150 or lower, further preferably 130 or lower, and particularly preferably 100 or lower. The Mooney viscosity is a value measured according to ASTM D1646-15 and JIS K6300-1:2013.

The fluorine content of the fluoroelastomer is preferably 50 to 75% by mass, more preferably 60 to 73% by mass, and still more preferably 63 to 72% by mass. The fluorine content is determined by calculation from the composition ratio of monomer units constituting the fluoroelastomer.

The fluoroelastomer preferably has a glass transition temperature of -50 to 0°C. The glass transition temperature can be determined by heating 10 mg of a sample at 20°C/min using a differential scanning calorimeter to obtain a DSC curve, and obtaining, as the glass transition temperature, a temperature indicating an intersection point of an extension of a baseline around the second-order transition of the DSC curve with a tangent of the DSC curve at the inflection point.

The fluoroelastomer described above can be produced by a conventional method.

(b) Cross-linking agent

The fluoroelastomer crosslinkable composition of the present disclosure contains a cross-linking agent. The cross-linking agent is at least one selected from the group consisting of a compound represented by the following general formula (b) and a salt of the compound with an alkali metal, an alkaline earth metal, or an onium compound. The compound represented by the general formula (b), the salt of the compound represented by the general formula (b) with an alkali metal, the salt of the compound represented by the general formula (b) with an alkaline earth metal, and the salt of the compound represented by the general formula (b) with an onium compound may be used singly or in combination of two or more of them.

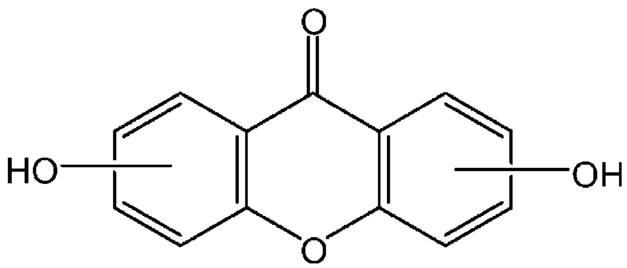

(b)

wherein hydrogen atom bonded to two benzene rings is optionally replaced with any substituent.

The compound represented by the general formula (b) has a xanthene skeleton, a carbonyl group bonded to the 9 position of the xanthene skeleton, and two hydroxy groups, one each to the two benzene rings contained in the xanthene skeleton. By using a compound with such a structure as a cross-linking agent, a formed article with excellent heat resistance can be obtained. For example, two hydroxy groups can be bonded to the 3 and 6 positions of the xanthene skeleton.

The compound represented by the general formula (b) is preferably 3,6-dihydroxy-9H-xanthen-9-one, represented by the following general formula (b1).

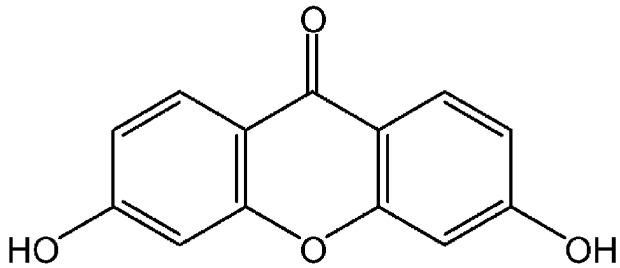

(b1)

A hydrogen atom bonded to the two benzene rings contained in the xanthene skeleton is optionally replaced with any substituent other than a hydroxy group. Examples of the substituent include a halogen atom, a cyano group, and an alkyl group having 1 to 10 carbon atoms.

The cross-linking agent may be a salt of the compound represented by the general formula (b) with an alkali metal, a salt of the compound represented by the general formula (b) with an alkaline earth metal, or a salt of the compound represented by the general formula (b) with an onium compound. The salt of the compound with an onium compound is an onium salt composed of an anion moiety derived from the compound and a cation moiety derived from an onium compound. When an onium salt is used as the cross-linking agent (b), the onium salt functions not only as a cross-linking agent but also as a crosslinking accelerator. Among these, from the viewpoint of the mechanical properties and heat resistance of a resulting formed article, the cross-linking agent is preferably the compound represented by the general formula (b1), or a salt of the compound represented by the general formula (b1) with an alkali metal, an alkaline earth metal, or an onium compound, and more preferably the compound represented by the general formula (b1) or a salt of the compound represented by the general formula (b1) with an onium compound.

The compound represented by the general formula (b), the salt of the compound represented by the general formula (b) with an alkali metal, the salt of the compound represented by the general formula (b) with an alkaline earth metal, and the salt of the compound represented by the general formula (b) with an onium compound may be used singly or in combination of two or more of them.

The salt of the compound represented by the general formula (b) with an onium compound can be obtained by reacting the compound represented by the general formula (b) with an alkaline substance such as sodium hydroxide in water or an organic solvent or with metallic sodium in an organic solvent, and then further with an onium compound such as benzyltriphenylphosphonium chloride, followed by distilling off the water or the organic solvent. If necessary, the solution of the reaction product may be filtered or the reaction product may be washed with water or an organic solvent to remove by-products such as sodium chloride.

The alkali metal is preferably Na or K. The alkaline earth metal is preferably Ca or Mg.

Examples of the onium salt include an ammonium salt, a phosphonium salt, and a sulfonium salt.

Examples of the onium compound constituting the onium salt include an ammonium compound, a phosphonium compound, and a sulfonium compound.

The onium compound constituting the onium salt is preferably at least one selected from the group consisting of an ammonium compound and a phosphonium compound, more preferably a phosphonium compound, still more preferably a quaternary phosphonium compound, and particularly preferably benzyltriphenylphosphonium. The ammonium compound is preferably a quaternary ammonium compound and more preferably 8-benzyl-1,8-diazabicyclo[5,4,0]-7-undecenium or benzyldimethyloctadecylammonium.

The cross-linking agent may be used in combination with other compounds. Examples of the mixture containing a cross-linking agent include a mixture such as a solid solution of a cross-linking agent and a crosslinking accelerator, and a mixture of a cross-linking agent and a compound capable of dissolving the cross-linking agent. The mixture of a cross-linking agent and a crosslinking accelerator is preferably a mixture of the compound represented by the general formula (b) and a quaternary phosphonium salt or a mixture of the compound represented by the general formula (b) and a quaternary ammonium salt, more preferably a mixture of the compound represented by the general formula (b) and a quaternary phosphonium salt, and still more preferably a mixture of the compound represented by the general formula (b) and benzyltriphenylphosphonium chloride.

The content of the cross-linking agent is preferably 0.5 to 50 mmol, more preferably 1.0 mmol or more, still more preferably 2.0 mmol or more, and is more preferably 40 mmol or less, still more preferably 30 mmol or less, particularly preferably 20 mmol or less based on 100 parts by mass of the polyol-crosslinkable fluoroelastomer, because a formed article with more excellent mechanical strength and heat resistance can be obtained. In addition, of the above cross-linking agent content, the content of the salt of the compound represented by the general formula (b) with an onium compound is preferably 0 to 10 parts by mass and more preferably 0 to 5 parts by mass based on 100 parts by mass of the polyol-crosslinkable fluoroelastomer.

(c) Crosslinking accelerator

The fluoroelastomer crosslinkable composition of the present disclosure preferably comprises a crosslinking accelerator. Use of the crosslinking accelerator enables the crosslinking reaction to be promoted by promoting the formation of intramolecular double bonds in dehydrofluorination reaction of the main chain of the fluoroelastomer. When a compound selected from the compound represented by the general formula (b) and the salt of the compound represented by the general formula (b) with an alkali metal or an alkaline earth metal is used as the cross-linking agent, a crosslinking accelerator is preferably used together with the cross-linking agent. Even when an onium salt is used as the cross-linking agent, a crosslinking accelerator can be used together with the cross-linking agent, but it is not always necessary to use the crosslinking accelerator. That is, in the fluoroelastomer crosslinkable composition of the present disclosure, the cross-linking agent (b) preferably comprises a salt of the compound represented by the general formula (b) with an onium compound, or the fluoroelastomer crosslinkable composition of the present disclosure preferably comprises a crosslinking accelerator. The amount of the crosslinking accelerator can be appropriately adjusted depending on the crosslinking conditions and the physical properties of the formed article. When the amount of the crosslinking accelerator is increased, the crosslinking reaction is accelerated or the crosslinking can be performed at a lower temperature, but the compression set characteristics tend to be deteriorated. On the other hand, when the amount of the crosslinking accelerator is reduced, the crosslinking reaction slows down, but the compression set characteristics tend to be improved.

Onium compounds (excluding the salt of the compound represented by the general formula (b) with an onium compound) are generally used as a polyol-crosslinkable crosslinking accelerator. The onium compound is not limited, and examples thereof include ammonium salts such as quaternary ammonium salts, phosphonium salts such as quaternary phosphonium salts, and sulfonium salts; among these, quaternary ammonium salts and quaternary phosphonium salts are preferable.

Examples of the quaternary ammonium salts are not limited, but include 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methylsulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5.4.0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter, referred to as DBU-B), 8-benzyl-1,8-diazabicyclo[5.4.0]-7-undecenium hydroxide, 8-phenethyl-1,8-diazabicyclo[5.4.0]-7-undecenium chloride, 8-(3-phenylpropyl)-1,8-diazabicyclo[5.4.0]-7-undecenium chloride, benzyldimethyloctadecylammonium chloride, tetrabutylammonium bromide, tetrabutylammonium chloride, benzyltributylammonium chloride, benzyltriethylammonium chloride, tetrabutylammonium hydrogen sulfate salt, and tetrabutylammonium hydroxide. Among these, from the viewpoint of crosslinkability, and the physical properties of crosslinked products, DBU-B or benzyldimethyloctadecylammonium chloride is preferable.

Examples of the quaternary phosphonium salts are not limited, but can include tetrabutylphosphonium chloride, benzyltriphenylphosphonium chloride (hereinafter, referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride; among these, from the viewpoint of crosslinkability, and the physical properties of crosslinked products, benzyltriphenylphosphonium chloride (BTPPC) is preferable.

The content of the crosslinking accelerator is preferably 0 to 10 parts by mass, more preferably 0 to 5 parts by mass, still more preferably 0 to 3 parts by mass, and particularly preferably 0 to 2 parts by mass based on 100 parts by mass of the polyol-crosslinkable fluoroelastomer, because the crosslinking reaction proceeds at an appropriate rate and a formed article with more excellent heat resistance can be obtained. In a case where the fluoroelastomer crosslinkable composition of the present disclosure contains a crosslinking accelerator, the lower limit of the content of the crosslinking accelerator may be, for example, 0.1 parts by mass or more based on 100 parts by mass of the polyol-crosslinkable fluoroelastomer. When the cross-linking agent is a salt of the compound represented by the general formula (b) with an onium compound, the content of the crosslinking accelerator is a value including the mass of the cation moiety of the cross-linking agent (that is, a cation derived from an onium compound).

(d) Acid acceptor

The fluoroelastomer crosslinkable composition of the present disclosure may further contain an acid acceptor. By containing the acid acceptor, the crosslinking reaction of the fluoroelastomer crosslinkable composition proceeds more smoothly, and the heat resistance is further improved.

Examples of the acid acceptor include: metal oxides such as magnesium oxide, calcium oxide, bismuth oxide, and zinc oxide; metal hydroxides such as calcium hydroxide; hydrotalcite; alkali metal silicates, such as sodium metasilicate, disclosed in Japanese Translation of PCT International Application Publication No. 2011-522921; and metal salts of weak acids disclosed in Japanese Patent Laid-Open No. 2003-277563. Examples of the metal salts of weak

acids include carbonates, benzoates, oxalates, and phosphites of Ca, Sr, Ba, Na, and K.

The acid acceptor is preferably at least one selected from the group consisting of metal oxides, metal hydroxides, alkali metal silicates, metal salts of weak acids, and hydrotalcite and more preferably sodium metasilicate hydrate, calcium hydroxide, magnesium oxide, bismuth oxide, or hydrotalcite, because a formed article with more excellent heat resistance can be obtained. When a formed article to be obtained is required to have good water resistance, acid resistance, or resistance to organic acid ester including biodiesel, the acid acceptor is preferably at least one selected from the group consisting of bismuth oxide and hydrotalcite.

In the fluoroelastomer crosslinkable composition, the content of the acid acceptor is preferably 0.1 to 100 parts by mass, more preferably 1 to 50 parts by mass, still more preferably 1 to 30 parts by mass, and particularly preferably 1 to 20 parts by mass based on 100 parts by mass of the polyol-crosslinkable fluoroelastomer, because a formed article with more excellent heat resistance can be obtained.

When the content of the acid acceptor is increased, the water resistance, the acid resistance, and the resistance to organic acid ester including biodiesel of a resulting formed article tend to reduce, and on the other hand, when the content of the acid acceptor is reduced, the crosslinking rate reduces, and the mechanical properties tend to reduce due to a reduction in crosslink density. Therefore, the content of the acid acceptor can be selected according to the application of a formed article to be obtained. In the case where an acid acceptor other than calcium hydroxide is contained, the content of calcium hydroxide is reduced to, for example, 0 to 1.5 parts by mass, and then the content of the other acid acceptor is adjusted to adjust the crosslink density, whereby a formed article with more excellent compression set characteristics at high temperature can be obtained.

(e) Other components

The fluoroelastomer crosslinkable composition may contain a variety of additives such as additives usually contained in a fluoroelastomer crosslinkable composition as required, and examples of such additives include fillers (carbon black, bituminous coal, barium sulfate, diatomaceous earth, calcined clay, talc, wollastonite, carbon nanotubes, and the like), processing aids (wax and the like), plasticizers, colorants, stabilizers, tackifiers (cumarone resins, cumarone indene resins, and the like), mold release agents, electroconductivity imparting agents, thermal conductivity imparting agents, surface non-adhesive agents, flexibility imparting agents, heat resistance improvers, flame retarders, foaming agents, and antioxidants disclosed in International Publication No. WO 2012/023485. The fluoroelastomer crosslinkable composition may contain one or more of commonly-used cross-linking agents and crosslinking accelerators different from those described above. Among these, carbon black is preferably thermal carbon black or furnace carbon black, and more preferably MT carbon black, FT carbon black, or SRF carbon black. When carbon black having a relatively large particle diameter such as carbon black or FT carbon black is added, a formed article with excellent compression set characteristics is obtained, and when carbon black having a small particle diameter is added, a formed article with excellent strength and elongation is obtained. By adding carbon blacks different in grade in combination, the above-described characteristics can be balanced.

Barium sulfate and wollastonite are preferable as a filler other than carbon black.

Examples of the processing aid include, but are not limited to, aliphatic amines such as stearylamine and the like, fatty acid esters such as stearic acid ester and sebacic acid ester, fatty acid amides such as stearic acid amide, long-chain alkyl alcohols, natural waxes, polyethylene waxes, phosphoric acid esters such as tricresyl phosphate and the like, and silicone-based processing aids. When two or more processing aids are added in appropriate amounts as required, mold releasability during molding and the physical properties of the formed article may well be balanced.

The content of the filler such as carbon black is not limited, and is preferably 0 to 300 parts by mass, more preferably 1 to 150 parts by mass, even more preferably 2 to 100 parts by mass, and particularly preferably 2 to 75 parts by mass based on 100 parts by mass of the polyol-crosslinkable fluoroelastomer.

The content of the processing aid such as wax is preferably 0 to 10 parts by mass, still more preferably 0 to 5 parts by mass, and particularly preferably 0 to 2 parts by mass based on 100 parts by mass of the polyol-crosslinkable fluoroelastomer. When a processing aid, a plasticizer, and a mold release agent are used, the mechanical properties and the sealability of a resulting formed article tend to be impaired, and thus the contents thereof need to be regulated so that the characteristics of a desired formed article to be obtained are acceptable.

The fluoroelastomer crosslinkable composition may contain a dialkyl sulfone compound. By containing the dialkyl sulfone compound, the crosslinking efficiency of the fluoroelastomer crosslinkable composition is enhanced, the crosslinking rate is increased, the compression set characteristics are further improved, and the flowability of a rubber compound is improved. Examples of the dialkyl sulfone compound include dimethyl sulfone, diethyl sulfone, dibutyl sulfone, methyl ethyl sulfone, diphenyl sulfone, and sulfolane. Among them, sulfolane is preferred from the viewpoint of crosslinking efficiency and compression set characteristics and appropriate boiling point. The content of the dialkyl sulfone compound is preferably 0 to 10 parts by mass, more preferably 0 to 5 parts by mass, and particularly preferably 0 to 3 parts by mass based on 100 parts by mass of the polyol-crosslinkable fluoroelastomer. In a case where the

fluoroelastomer crosslinkable composition of the present disclosure contains a dialkyl sulfone compound, the lower limit of the content of the dialkyl sulfone compound may be, for example, 0.1 parts by mass or more based on 100 parts by mass of the polyol-crosslinkable fluoroelastomer.

The dialkyl sulfone compound and the processing aid may be added together, because the crosslinking rate, the flowability of a rubber compound during forming, mold releaseability during molding, and the mechanical properties of the formed article are well balanced.

The fluoroelastomer crosslinkable composition is obtained by kneading the fluoroelastomer (a), the cross-linking agent (b), the crosslinking accelerator (c), the acid acceptor (d), and the other components (e) and the like by using a rubber kneading machine generally used. The rubber kneading machine may be a roll, a kneader, a Banbury mixer, an internal mixer, a twin-screw extruder, or the like.

In order to homogeneously disperse the components in the elastomer, a method may be used in which the fluoroelastomer (a), the cross-linking agent (b), and the crosslinking accelerator (c) are melted and kneaded at a high temperature of 100 to 200°C using a closed-type kneading machine such as a kneader, and then the acid acceptor (d) and the other components (e) are kneaded at a relatively low temperature equal to or lower than such a temperature.

The dispersibility can further be enhanced by kneading the fluoroelastomer (a), the cross-linking agent (b), the crosslinking accelerator (c), the acid acceptor (d), and the other components (e), then allowing the resultant to stand at room temperature for 12 hours or more, and then again kneading the resultant.

<Formed article>

A formed article of the present disclosure can be obtained by crosslinking the fluoroelastomer crosslinkable composition. The formed article of the present disclosure can also be obtained by forming and crosslinking the fluoroelastomer crosslinkable composition. The fluoroelastomer crosslinkable composition can be formed by a conventionally known method. The forming and crosslinking methods and conditions may be within the scope of known methods and conditions of the adopted forming and crosslinking. The order of forming and crosslinking is not limited, and the composition may be formed and then crosslinked, may be crosslinked and then formed, or simultaneously formed and crosslinked.

Examples of the forming method include, but are not limited to, compression molding, transfer molding, injection molding, extrusion forming, and forming involving a rotocure. The crosslinking method may be a steam crosslinking method, a heating crosslinking method, a radiation crosslinking method, or the like; among these, a steam crosslinking method or a heating crosslinking method is preferable. The unlimited specific crosslinking condition may appropriately be determined according to the kinds of the cross-linking agent (b), the crosslinking accelerator (c), the acid acceptor (d), and the like to be used usually in the temperature range of 140 to 250°C and in the crosslinking time of 1 minute to 24 hours.

By heating the obtained formed article with an oven or the like, mechanical properties such as tensile strength, heat resistance, and compression set characteristics at high temperature can be improved. The unlimited specific crosslinking condition may appropriately be determined according to the kinds of the cross-linking agent (b), the crosslinking accelerator (c), the acid acceptor (d), and the like to be used usually in the temperature range of 140 to 300°C and in the range of 30 minutes to 72 hours.

The formed article of the present disclosure is excellent in various properties such as heat resistance, oil resistance, chemical resistance, and flexibility, and is also excellent in compression set characteristics at high temperature. Therefore, the formed article of the present disclosure is generally used in sites for sliding in contact with other materials, enclosing or sealing other materials and substances, and vibration proofing and sound proofing, and can be used as various parts in various fields such as the automobile industry, the aircraft industry, and the semiconductor industry. Particularly, the formed article of the present disclosure can suitably be used as a sealing material.

Examples of the fields where the formed article is used include a semiconductor-related field, an automobile field, an aircraft field, a space/rocket field, a ship field, a chemical product field such as chemical plants, a pharmaceutical field such as drugs, a photography field such as developing machines, a printing field such as printing machines, a painting field such as painting equipment, an analytical/physicochemical machinery field such as analytical instruments and measurement instruments, a food equipment field including food plant equipment and household products, a beverage and food manufacturing apparatus field, a drug manufacturing apparatus field, a medical component field, a chemical-reagent transport equipment field, a nuclear power plant equipment field, a steel field such as steel plate processing equipment, a general industrial field, an electrical field, a fuel cell field, an electronic component field, an optical equipment component field, a space equipment component field, a petrochemical plant equipment field, an energy resource searching and mining equipment component field for oil, gas, and the like, a petroleum refining field, and a petroleum transport equipment component field.

Examples of the usage of the formed article include various sealing materials and packings, such as rings, packings, gaskets, diaphragms, oil seals, bearing seals, lip seals, plunger seals, door seals, lip and face seals, gas

delivery plate seals, wafer support seals, and barrel seals. The formed article as a sealing material can be used in applications where heat resistance, solvent resistance, chemical resistance, and non-stickiness are required.

Also, the formed article can be used as a tube, a hose, a roll, any of various rubber rolls, a flexible joint, a rubber plate, a coating, a belt, a damper, a valve, a valve seat, a valve body, a chemical resistant coating material, a laminating material, a lining material, and the like.

The cross-sectional shape of the ring, packing, and seal may be any of various shapes, and, specifically, it may be, for example, a square shape, an O-shape, or a ferrule, or may be an irregular shape such as a D-shape, an L-shape, a T-shape, a V-shape, an X-shape, or a Y-shape.

In the semiconductor-related field, the formed article can be used in, for example, a semiconductor manufacturing apparatus, a liquid crystal panel manufacturing apparatus, a plasma panel manufacturing apparatus, a plasma display panel manufacturing apparatus, a plasma-addressed liquid crystal panel manufacturing apparatus, an organic EL panel manufacturing apparatus, a field emission display panel manufacturing apparatus, a solar cell substrate manufacturing apparatus, and a semiconductor transport apparatus. Examples of such apparatuses include a CVD apparatus, a gas control apparatus such as a semiconductor gas control apparatus, a dry etching apparatus, a wet etching apparatus, a plasma etching apparatus, a reactive ion etching apparatus, a reactive ion beam etching apparatus, a sputter etching apparatus, an ion beam etching apparatus, an oxidation diffusion apparatus, a sputtering apparatus, an ashing apparatus, a plasma ashing apparatus, a cleaning apparatus, an ion injection apparatus, a plasma CVD apparatus, a ventilation apparatus, an exposure apparatus, a polishing apparatus, a film forming apparatus, a dry etching cleaning apparatus, a UV/$O_3$ cleaning apparatus, an ion beam cleaning apparatus, a laser beam cleaning apparatus, a plasma cleaning apparatus, a gas etching cleaning apparatus, an extraction cleaning apparatus, a Soxhlet extraction cleaning apparatus, a high temperature high pressure extraction cleaning apparatus, a microwave extraction cleaning apparatus, a supercritical extraction cleaning apparatus, a cleaning apparatus involving hydrofluoric acid, hydrochloric acid, sulfuric acid, ozone water, or the like, a stepper, a coater/developer, a CMP apparatus, an excimer laser exposure machine, chemical solution piping, gas piping, an apparatus for carrying out plasma treatment such as $NF_3$ plasma treatment, $O_2$ plasma treatment, and fluorine plasma treatment, a heat treatment film forming apparatus, a wafer transport apparatus, a wafer cleaning apparatus, a silicon wafer cleaning apparatus, a silicon wafer treatment apparatus, an apparatus used in LP-CVD process, an apparatus used in lamp annealing process, and an apparatus used in reflow process.

Specific examples of usage in the semiconductor-related field include various sealing materials such as an O-ring and a gasket for a gate valve, a quartz window, a chamber, a chamber lid, a gate, a bell jar, a coupling, and a pump; various sealing materials such as an O-ring for a resist developer and stripper, a hose, and a tube; a lining and a coating for a resist developer tank, a stripper tank, a wafer cleaning solution tank, and a wet etching tank; a diaphragm for a pump; a roll for wafer transport; a hose and a tube for a wafer cleaning solution; a sealing material for a clean facility, such as a sealant for a clean facility such as a clean room; a sealing material for a storage room for storing semiconductor manufacturing apparatuses and devices such as wafers; and a diaphragm for transferring a chemical solution used in a semiconductor manufacturing process.

In the automobile field, the formed article can be used in an engine body, a main motor system, a valve train system, a lubrication/cooling system, a fuel system, an intake/exhaust system, a transmission system of a drive system, a steering system of a chassis, a brake system, and an electrical component such as a basic electrical component, a control system electrical component, or an equipment electrical component. The automobile field also includes motorcycles.

As for the engine body and its peripherals described above, the formed article can be used for various sealing materials that are required to have heat resistance, oil resistance, fuel oil resistance, engine cooling antifreeze resistance, and steam resistance, and examples of such sealing materials include seals such as gaskets, shaft seals, and valve stem seals, non-contact or contact type packings such as self-seal packings, piston rings, split-ring packings, mechanical seals, and oil seals, bellows, diaphragms, hoses, tubes, and various sealing materials used for electric wires, cushioning materials, anti-vibration materials, and belt AT apparatuses.

Specific examples of usage in the fuel system include an O-ring used for a fuel injector, a cold start injector, a fuel line quick connector, a sender flange quick connector, a fuel pump, a fuel tank quick connector, a gasoline mixing pump, a gasoline pump, a tube body of a fuel tube, a connector of a fuel tube, an injector, and the like; a seal used for an intake manifold, a fuel filter, a pressure regulating valve, a canister, a fuel tank cap, a fuel pump, a fuel tank, a fuel tank sender unit, a fuel injection apparatus, a fuel high pressure pump, a fuel line connector system, a pump timing control valve, a suction control valve, a solenoid subassembly, a fuel cut valve, and the like; a canister purge solenoid valve seal, an onboard refueling vapor recovery (ORVR) valve seal, a fuel pump oil seal, a fuel sender seal, a fuel tank rollover valve seal, a filler seal, an injector seal, a filler cap seal, and a filler cap valve seal; a hose such as a fuel hose, a fuel supply hose, a fuel return hose, a vapor (evaporation) hose, a vent (breather) hose, a filler hose, a filler neck hose, a hose in a fuel tank (in-tank hose), a carburetor control hose, a fuel inlet hose, and a fuel breather hose; a gasket used for a fuel filter, a fuel line connector system, and the like, and a flange gasket used for a carburetor and the like; a line material for a steam recovery line, a fuel feed line, a vapor/ORVR line, and the like; a diaphragm used for a canister, an

ORVR, a fuel pump, a fuel tank pressure sensor, a gasoline pump, a carburetor sensor, a composite air controller (CAC), a pulsation damper, a canister, an autocock, and the like, and a pressure regulator diaphragm of a fuel injector; a fuel pump valve, a carburetor needle valve, a rollover check valve, and a check valve; a tube used in a vent (breather) and a fuel tank; a tank packing for a fuel tank or the like, and a packing for a carburetor acceleration pump piston; a fuel sender anti-vibration component for a fuel tank; an O-ring and a diaphragm for controlling a fuel pressure; an accelerator pump cup; an in-tank fuel pump mount; an injector cushion ring of a fuel injector; an injector seal ring; a needle valve core valve of a carburetor; an acceleration pump piston of a carburetor; a valve seat of a compound air controller (CAC); a fuel tank body; and a seal component for a solenoid valve.

Specific examples of usage in the brake system include a diaphragm used for a master back, a hydraulic brake hose air brake, a brake chamber of an air brake, and the like; a hose used for a brake hose, a brake oil hose, a vacuum brake hose, and the like; various sealing materials such as an oil seal, an O-ring, a packing, and a brake piston seal; a breather valve and a vacuum valve for a master back and a check valve for a brake valve; a piston cup (rubber cup) for a master cylinder, and a brake cup; and a boot for a master cylinder and a vacuum booster of a hydraulic brake, and a wheel cylinder of a hydraulic brake, and an O-ring and a grommet for an anti-lock brake system (ABS).

Specific examples of usage in the basic electrical component include an insulator and a sheath of an electric wire (harness), a tube of a harness exterior component, and a grommet for a connector.

Specific examples of usage in the control system electrical component include a covering material for various sensor wires.

Specific examples of usage in the equipment electrical component include an O-ring and a packing for a car air conditioner, a cooler hose, a high pressure air conditioner hose, an air conditioner hose, a gasket for an electronic throttle unit, a plug boot for direct ignition, and a diaphragm for a distributor. The formed article can also be used for bonding an electrical component.

Specific examples of usage in the intake/exhaust system include a packing used for an intake manifold, an exhaust manifold, and the like, and a throttle body packing for a throttle; a diaphragm used for EGR (exhaust gas recirculation), pressing control (BPT), a wastegate, a turbo wastegate, an actuator, an actuator for a variable turbine geometry (VTG) turbo, an exhaust purification valve, and the like; a hose such as an EGR (exhaust gas recirculation) control hose, an emission control hose, a turbo oil hose (supply) and a turbo oil hose (return) of a turbocharger, a turbo air hose, an intercooler hose, a turbocharger hose, a hose connected to a compressor of a turbo engine equipped with an intercooler, an exhaust gas hose, an air intake hose, a turbo hose, and a DPF (diesel particulate filter) sensor hose; an air duct and a turbo air duct; an intake manifold gasket; and a sealing material for EGR, a sealing material used for an afterburn prevention valve seat of an AB valve, a turbine shaft seal (of a turbocharger and the like), and a seal member used for a rocker cover used in an automobile engine and a groove component of an air intake manifold and the like.

In addition, in exhaust gas control components, the formed article can be used as a seal used for a steam recovery canister, a catalytic converter, an exhaust gas sensor, an oxygen sensor, and the like, and a seal for a solenoid armature of a steam recovery and steam canister; and an intake manifold gasket.

In addition, in components relating to diesel engines, the formed article can be used as an O-ring seal for a direct injection injector, a rotary pump seal, a control diaphragm, a fuel hose, and a diaphragm for EGR, a priming pump, and a boost compensator, and the like. It can also be used for an O-ring, a sealing material, a hose, a tube, a diaphragm, a gasket material, and a pipe used for a urea SCR system, a urea water tank body of a urea SCR system, a sealing material for a urea water tank, and the like.

Specific examples of usage in the transmission system include a transmission-related bearing seal, oil seal, O-ring, packing, and torque converter hose. Examples also include a transmission oil seal, and a transmission oil hose, an ATF hose, an O-ring, and a packing of an AT.

The transmission includes an AT (automatic transmission), an MT (manual transmission), a CVT (continuously variable transmission), a DCT (dual clutch transmission), and the like.

Examples also include an oil seal, a gasket, an O-ring, and a packing for a manual or automatic transmission, an oil seal, a gasket, an O-ring, and a packing for a continuously variable transmission (a belt type or a toroidal type), a packing for an ATF linear solenoid, an oil hose for a manual transmission, an ATF hose for an automatic transmission, and a CVTF hose for a continuously variable transmission (a belt type or a toroidal type).

Specific examples of usage in the steering system include a power steering oil hose and a high pressure power steering hose.

Examples of usage in the engine body of an automobile engine include gaskets such as a cylinder head gasket, a cylinder head cover gasket, an oil pan packing, and a general-purpose gasket, seals such as an O-ring, a packing, and a timing belt cover gasket, hoses such as a control hose, anti-vibration rubber of an engine mount, a control valve diaphragm, and a camshaft oil seal.

In the main motor system of an automobile engine, the formed article can be used for a shaft seal such as a crankshaft seal and a camshaft seal, and the like.

In the valve train system of an automobile engine, the formed article can be used for a valve stem oil seal of

an engine valve, a valve seat of a butterfly valve, and the like.

In the lubrication/cooling system of an automobile engine, the formed article can be used for an engine oil cooler hose, an oil return hose, and a seal gasket of an engine oil cooler, a water hose around a radiator, a radiator seal, a radiator gasket, a radiator O-ring, a vacuum pump oil hose of a vacuum pump, a radiator hose, a radiator tank, a diaphragm for oil pressure, a fan coupling seal, and the like.

Thus, specific examples of usage in the automobile field include an engine head gasket, an oil pan gasket, a manifold packing, an oxygen sensor seal, an oxygen sensor bush, a nitrogen oxide ($NO_x$) sensor seal, a nitrogen oxide ($NO_x$) sensor bush, a sulfur oxide sensor seal, a temperature sensor seal, a temperature sensor bush, a diesel particle filter sensor seal, a diesel particle filter sensor bush, an injector O-ring, an injector packing, a fuel pump O-ring and diaphragm, a gearbox seal, a power piston packing, a cylinder liner seal, a valve stem seal, a static valve stem seal, a dynamic valve stem seal, an automatic transmission front pump seal, a rear axle pinion seal, a universal joint gasket, a speedometer pinion seal, a foot brake piston cup, a torque transmission apparatus O-ring and oil seal, a discharge gas afterburner seal and bearing seal, an afterburner hose, a carburetor sensor diaphragm, an anti-vibration rubber (such as an engine mount, an exhaust part, a muffler hanger, a suspension bush, a center bearing, and a strut bumper rubber), a suspension anti-vibration rubber (such as a strut mount and a bush), a drive system anti-vibration rubber (such as a damper), a fuel hose, an EGR tube and hose, a twin cab tube, a carburetor needle valve core valve, a carburetor flange gasket, an oil hose, an oil cooler hose, an ATF hose, a cylinder head gasket, a water pump seal, a gearbox seal, a needle valve tip, a motorcycle reed valve reed, an automobile engine oil seal, a gasoline hose gun seal, a car air conditioner seal, an engine intercooler rubber hose, a seal of fuel line connector systems, a CAC valve, a needle tip, an electric wire around an engine, a filler hose, a car air conditioner O-ring, an intake gasket, a fuel tank material, a distributor diaphragm, a water hose, a clutch hose, a PS hose, an AT hose, a master back hose, a heater hose, an air conditioner hose, a ventilation hose, an oil filler cap, a PS rack seal, a rack & pinion boot, a CVJ boot, a ball joint dust cover, a strut dust cover, a weather strip, a glass run, a center unit packing, a body side welt, a bumper rubber, a door latch, a dash insulator, a high tension cord, a flat belt, a poly V belt, a timing belt, a toothed belt, a V-ribbed belt, a tire, a wiper blade, a diaphragm and a plunger for an LPG vehicle regulator, a diaphragm and a valve for a CNG vehicle regulator, a DME compatible rubber component, an auto tensioner diaphragm and boot, an idle speed control diaphragm and valve, an auto speed control actuator, a negative pressure pump diaphragm, check valve, and plunger, an O.P.S. diaphragm and O-ring, a gasoline pressure relief valve, an engine cylinder sleeve O-ring and gasket, a wet cylinder sleeve O-ring and gasket, a differential gear seal and gasket (gear oil seal and gasket), a power steering apparatus seal and gasket (PSF seal and gasket), a shock absorber seal and gasket (SAF seal and gasket), a constant velocity joint seal and gasket, a wheel bearing seal and gasket, a metal gasket coating agent, a caliper seal, a boot, a wheel bearing seal, and a bladder used in vulcanization forming of a tire.

In the aircraft field, the space/rocket field, and the ship field, the formed article can be used especially in a fuel system and a lubricating oil system.

In the aircraft field, the formed article can be used as, for example, various aircraft sealing components, various aircraft components in aircraft engine oil applications, a jet engine valve stem seal, gasket, and O-ring, a rotating shaft seal, a hydraulic equipment gasket, a fire wall seal, a fuel supply hose, gasket, and O-ring, an aircraft cable, oil seal, and shaft seal, and the like.

In the space/rocket field, the formed article can be used as, for example, a lip seal, a diaphragm, and an O-ring for a spacecraft, a jet engine, a missile, and the like, a gas turbine engine oil-resistant O-ring, a vibration isolation table pad for missile ground control, and the like.

In the ship field, the formed article can be used as, for example, a screw propeller shaft stern seal, a diesel engine intake/exhaust valve stem seal, a valve seal of a butterfly valve, a valve seat and a shaft seal of a butterfly valve, a shaft seal of a butterfly valve, a stern tube seal, a fuel hose, a gasket, an engine O-ring, a ship cable, a ship oil seal, a ship shaft seal, and the like.

In the chemical product field such as chemical plants and the pharmaceutical field such as drugs, the formed article can be used in a process where a high level of chemical resistance is required, such as a process of producing chemical products such as drugs, agrochemicals, coating materials, and resins.

Specific examples of usage in the chemical product and pharmaceutical fields include seals used in a chemical apparatus, a pump and a flow meter for chemical reagents, piping for chemical reagents, a heat exchanger, an agrochemical sprayer, an agrochemical transfer pump, gas piping, a fuel cell, an analytical instrument and physicochemical instrument (such as a column fitting for analytical instruments and measurement instruments), an expansion joint of a flue gas desulfurization apparatus, a nitric acid plant, a power plant turbine, and the like, a seal used in a medical sterilization process, a seal for a plating solution, a belt roller seal for paper making, a wind tunnel joint seal; an O-ring used in a chemical apparatus such as a reactor and a stirrer, an analytical instrument and measurement instrument, a chemical pump, a pump housing, a valve, a rotary meter, and the like, an O-ring for a mechanical seal, and an O-ring for compressor sealing; a packing used in a tube joint part or the like of a high temperature vacuum dryer, a gas chromatograph, and a pH meter, and a glass cooler packing for a sulfuric acid manufacturing apparatus; a diaphragm

used in a diaphragm pump, an analytical instrument, a physicochemical instrument, and the like; a gasket used in an analytical instrument and a measurement instrument; a fitting wheel (ferrule) used in an analytical instrument and a measurement instrument; a valve seat; a U cup; a lining used in a chemical apparatus, a gasoline tank, a wind tunnel, and the like, and a corrosion-resistant lining for an anodized aluminum processing tank; a coating of a masking jig for plating; a valve component of an analytical instrument and a physicochemical instrument; an expansion joint of a flue gas desulfurization plant; an acid resistant hose against concentrated sulfuric acid and the like, a chlorine gas transfer hose, an oil-resistant hose, a rainwater drain hose for benzene and toluene storage tanks; a chemical resistant tube used in an analytical instrument and a physicochemical instrument and a medical tube; a trichloroethylene-resistant roll for fiber dyeing and a dyeing roll; a medical plug for drug; a medical rubber plug; a chemical solution bottle, a chemical solution tank, a bag, a chemical container; and protective items such as a glove and a boot that are resistant to strong acids and solvents.

In the photography field such as developing machines, the printing field such as printing machines, and the painting field such as painting equipment, the formed article can be used as a roll, a belt, a seal, a valve component, and the like of a dry copier.

Specific examples of usage in the photography field, the printing field, and the painting field include a surface layer of a transfer roll of a copier, a cleaning blade of a copier, and a copier belt; a roll (such as a fixing roll, a crimping roll, and a pressure roll) and a belt for OA equipment such as a copier, a printer, and a facsimile; a roll, a roll blade, and a belt of a PPC copier; a roll of a film developer and an X-ray film developer; a printing roll, a scraper, a tube, a valve component, and a belt for a printing machine; an ink tube, a roll, and a belt of a printer; a coating roll, a scraper, a tube, and a valve component of painting and coating equipment; and a development roll, a gravure roll, a guide roll, a guide roll for a magnetic tape manufacturing coating line, a gravure roll for a magnetic tape manufacturing coating line, a coating roll, and the like.

In the food equipment field including food plant equipment and household products, the formed article can be used in a food manufacturing process and for food transfer equipment or food storage equipment.

Specific examples of usage in the food equipment field include a seal for a plate-type heat exchanger, an electromagnetic valve seal for a vending machine, a thermo pot packing, a sanitary pipe packing, a pressure cooker packing, a water heater seal, a heat exchanger gasket, a diaphragm and a packing for a food processing treatment apparatus, a rubber material for a food processing treatment machine (e.g., various seals such as a heat exchanger gasket, a diaphragm, and an O-ring, piping, a hose, a sanitary packing, a valve packing, and a filling packing used as a joint between the mouth of a bottle or the like and a filler during filling). Examples also include a packing, a gasket, a tube, a diaphragm, a hose, and a joint sleeve used for products such as alcoholic beverages and soft drinks, a filling apparatus, a food sterilizer, a brewing apparatus, a water heater, and various food vending machines.

In the nuclear power plant equipment field, the formed article can be used for a check valve and a pressure reducing valve around a nuclear reactor, a seal for a uranium hexafluoride enricher, and the like.

Specific examples of usage in the general industrial field include a sealing material for hydraulic equipment such as a machine tool, a construction machine, and a hydraulic machine; a seal and a bearing seal of a hydraulic and lubrication machine; a sealing material used for a mandrel and the like; a seal used for a window of dry cleaning equipment and the like; a seal and a (vacuum) valve seal for a cyclotron, a proton accelerator seal, a seal for an automatic packaging machine, a diaphragm of a pump for an analyzer of sulfur dioxide gas and chlorine gas in air (pollution measuring equipment), a snake pump lining, a roll and a belt for a printer, a transport belt (a conveyor belt), a squeezing roll for acid-washing of an iron plate and the like, a robot cable, a solvent squeezing roll for aluminum rolling line and the like, a coupler O-ring, an acid resistant cushioning material, a dust seal and a lip rubber for a sliding part of a cutting machine, a gasket for garbage incinerator, a friction material, a metal or rubber surface modifier, and a covering material. The formed article can also be used as a gasket and a sealing material for an apparatus used in a papermaking process, a sealant for a clean room filter unit, an architectural sealant, a protective coating agent for concrete, cement, and the like, a glass cloth impregnating material, a polyolefin processing aid, a polyethylene moldability improving additive, a fuel tank for a small generator, a lawnmower, and the like, and a pre-coated metal obtained by performing primer treatment on a metal plate. In addition, the formed article can be used as a sheet and a belt by impregnating a woven fabric therewith and baking it.

Specific examples of usage in the steel field include an iron plate processing roll for iron plate processing equipment.

Specific examples of usage in the electrical field include an insulating oil cap for the Shinkansen bullet train, a benching seal for a liquid-sealed transformer, a transformer seal, an oil well cable jacket, a seal for an oven such as an electric furnace, a window frame seal for a microwave oven, a sealing material used for bonding a wedge and a neck of CRT, a sealing material for a halogen lamp, a fixing agent for an electrical component, a sealing material for end treatment of a sheathed heater, and a sealing material used for insulating and moisture proofing treatment of a lead wire terminal of electrical equipment. The formed article can also be used for a covering material of an oil resistant/heat resistant electric wire, a highly heat resistant electric wire, a chemical resistant electric wire, a highly insulated electric

wire, a high voltage transmission line, a cable, an electric wire used in a geothermal power generation apparatus, an electric wire used around an automobile engine, and the like. The formed article can also be used for an oil seal and a shaft seal of a vehicle cable. Moreover, the formed article can also be used for an electrical insulation material (such as a material used as an insulation spacer of various electric apparatuses, an insulation tape used in a joint, a terminal part, and the like of a cable, and a heat-shrinkable tube), and an electric and electronic apparatus materials used in a high temperature atmosphere (such as a lead wire material for a motor and an electric wire material around a high temperature furnace). The formed article can also be used for a sealing layer and a protective film (a back sheet) of a solar cell.

In the fuel cell field, the formed article can be used as a sealing material between electrodes or between an electrode and a separator in solid polymer fuel cells, phosphate fuel cells, and the like and a seal, a packing, a separator, and the like of piping for hydrogen, oxygen, produced water, and the like.

In the electronic component field, the formed article can be used for a heat dissipation material raw material, an electromagnetic wave shielding material raw material, a gasket for a computer hard disk drive (magnetic recorder), and the like. The formed article can also be used as a cushioning rubber (a crash stopper) for a hard disk drive, a binder for an electrode active material of a nickel-metal hydride secondary battery, a binder for an active material of a lithium-ion battery, a polymer electrolyte for a lithium secondary battery, a binder for the positive electrode of an alkaline rechargeable battery, a binder for an EL element (an electroluminescence element), a binder for the electrode active material of a capacitor, an encapsulating agent, a sealant, a film and a sheet for a covering material for the quartz of an optical fiber, an optical fiber covering material, and the like, a potting, a coating, and an adhesive seal for electronic components and circuit boards such as a CMOS electronic circuit, a transistor, an integrated circuit, an organic transistor, a light emitting element, an actuator, a memory, a sensor, a coil, a capacitor, and a resistor, a fixative for an electronic component, a modifying agent for an encapsulating agent such as an epoxy, a coating agent for a printed circuit board, a modifying agent for a printed wiring board prepreg resin such as an epoxy, an anti-scattering material for a light bulb and the like, a gasket for a computer, a cooling hose for a large computer, a packing such as a gasket or an O-ring for a secondary battery, especially a lithium secondary battery, a sealing layer for covering one or both of outer surfaces of an organic EL structure, a connector, and a damper.

In the chemical reagent transport equipment field, the formed article can be used for a safety valve and a shipping valve for trucks, trailers, tank trucks, ships, and the like.

In the energy resource searching and mining equipment component field for oil, gas, and the like, the formed article can be used as various sealing materials used in mining petroleum, natural gas, and the like, an electric connector boot used in oil wells, and the like.

Specific examples of usage in the energy resource search and mining equipment component field include a drill bit seal, a pressure regulating diaphragm, a horizontal drilling motor (stator) seal, a stator bearing (shaft) seal, a sealing material used in a blowout prevention apparatus (BOP), a sealing material used in a rotary blowout prevention apparatus (pipe wiper), a sealing material and a gas-liquid connector used in MWD (real-time drilling information detection system), a logging tool seal used in logging equipment (such as an O-ring, a seal, a packing, a gas-liquid connector, and a boot), an inflatable packer and a completion packer and a packer seal used therefor, a seal and a packing used in a cementing apparatus, a seal used in a perforator, a seal and a packing and a motor lining used in a mud pump, an underground auditory detector cover, a U-cup, a composition seating cup, a rotating seal, a laminated elastomeric bearing, a flow control seal, a sand volume control seal, a safety valve seal, a seal of hydraulic fracturing equipment, a seal and a packing for a linear packer and a linear hanger, a wellhead seal and packing, a seal and a packing for a chalk and a valve, a sealing material for LWD (logging while drilling), a diaphragm used in oil exploration and oil drilling applications (such as a diaphragm for supplying lubricating oil to oil drilling pits), and a seal element for gate valves, electronic boots, and perforation guns.

In addition, the formed article can be used for a joint seal for a kitchen, a bathroom, a washroom, and the like; coated cloth of an outdoor tent; a seal for a stamp material; a rubber hose for a gas heat pump and a Freon-resistant rubber hose; an agricultural film, lining, and weather resistance cover; a tank of a laminated steel sheet or the like used in the fields of construction and household electric appliances, and the like.

Moreover, the formed article can also be used as an article combined with a metal such as aluminum. Examples of such usage include a door seal, a gate valve, a pendulum valve, and a solenoid tip as well as a piston seal and a diaphragm combined with a metal, a metal rubber component combined with a metal, such as a metal gasket.

The formed article can also be used for a rubber component, a brake shoe, a brake pad, and the like of bicycles.

Further, the formed article can be applied to belts.

Examples of the belt are as follows: a power transmission belt (including a flat belt, a V-belt, a V-ribbed belt, a toothed belt, and the like), a flat belt used as a transport belt (a conveyor belt) at various high-temperature sites, e.g., around an engine of agricultural machinery, a machine tool, industrial machinery, and the like; a conveyor belt for transporting bulk and particulate materials such as coal, crushed stone, earth and sand, ore, wood chips, and the like in a high temperature environment; a conveyor belt used in a steel mill such as a blast furnace; a conveyor belt in

applications exposed to a high temperature environment in precision equipment assembly plants, food factories, and the like; a V-belt and a V-ribbed belt for agricultural machinery, general equipment (such as OA equipment, printing machines, and dryers for business use), automobiles, and the like; a transmission belt for a transfer robot; a toothed belt such as a transmission belt for food machines and machine tools; and a toothed belt used in an automobile, OA equipment, medical equipment, a printing machine, and the like.

In particular, a timing belt is a representative example of a toothed belt for automobiles.

The belt may have a single-layer structure or a multi-layer structure.

In the case of a multi-layer structure, the belt may be composed of a layer obtained by crosslinking the fluoroelastomer crosslinkable composition and a layer made of another material.

Examples of the layer made of another material in the belt with a multi-layer structure include a layer made of another rubber, a layer made of a thermoplastic resin, various fiber-reinforced layers, canvas, and a metal foil layer.

The formed article can also be used for an industrial anti-vibration pad, an anti-vibration mat, a railway slab mat, a pad, an automobile anti-vibration rubber, and the like. Examples of the automobile anti-vibration rubber include anti-vibration rubbers for an engine mount, a motor mount, a member mount, a strut mount, a bush, a damper, a muffler hanger, a center bearing, and the like.

Examples of another usage include a joint member for a flexible joint, an expansion joint, and the like, a boot, and a grommet. In the ship field, examples include marine pumps.

The joint member refers to a joint used in piping and piping equipment, and used in applications for preventing vibration and noise produced from the piping system, absorbing expansion, contraction and displacement resulting from a temperature change and a pressure change, absorbing a dimensional change, mitigating and preventing the influences of earthquakes and land subsidence, and the like.

The flexible joint and the expansion joint can be preferably used as complex-shape formed articles for, for example, shipbuilding piping, for mechanical piping of a pump, a compressor, and the like, for chemical plant piping, for electrical piping, for civil engineering and water piping, and for automobiles.

The boot can be preferably used as a complex-shape formed article for various industrial boots, e.g., a boot for an automobile such as a constant velocity joint boot, a dust cover, a rack and pinion steering boot, a pin boot, and a piston boot, a boot for agricultural machinery, a boot for an industrial vehicle, a boot for construction machinery, a boot for hydraulic machinery, a boot for pneumatic machinery, a boot for a centralized lubricator, a boot for liquid transfer, a boot for firefighting, and a boot for transferring various types of liquefied gases.

The formed article can also be used for a diaphragm for a filter press, a diaphragm for a blower, a diaphragm for supplying water, a diaphragm for a liquid storage tank, a diaphragm for a pressure switch, a diaphragm for an accumulator, a diaphragm for an air spring such as a suspension, and the like.

By adding the formed article to a rubber or a resin, an antislipping agent for obtaining a formed article or a coating film that is unlikely to be slippery in an environment that gets with water such as rain, snow, ice, sweat, or the like can be obtained.

The formed article can also be used as, for example, a cushioning material for hot press forming in production of decorative plywood, a printed circuit board, an electrical insulation board, and a rigid polyvinyl chloride laminate made of a melamine resin, a phenol resin, an epoxy resin, or the like.

In addition, the formed article can also contribute to giving impermeability to various supports such as weapon-related sealing gaskets and protective clothes against contact with invasive chemicals.

The formed article can also be used for an O (square)-ring, a V-ring, an X-ring, a packing, a gasket, a diaphragm, an oil seal, a bearing seal, a lip seal, a plunger seal, a door seal, a lip and face seal, a gas delivery plate seal, a wafer support seal, a barrel seal, and other various sealing materials used for sealing or encapsulating lubricating oil (such as engine oil, transmission oil, and gear oil) containing amine-type additives (in particular, amine-type additives used as antioxidants and detergent dispersants) used in transportation systems such as automobiles and ships, and fuel oil and grease (in particular, urea-based grease), and can also be used as a tube, a hose, various rubber rolls, a coating, a belt, a valve body of a valve, and the like. The formed article can also be used as a laminating material and a lining material.

The formed article can also be used for a covering material for a heat-resistant, oil-resistant electric wire used as a lead electric wire of a sensor that comes into contact with transmission oil and/or engine oil of an internal combustion engine of an automobile and the like and that detects the oil temperature and/or the oil pressure, and can also be used in a high-temperature oil atmosphere inside an oil pan or the like of an automatic transmission or an engine.

In addition, the formed article may be used after forming a vulcanized film thereon. Specific examples include applications such as a non-stick oil resistant roll for a copier, a weather strip for preventing weathering and freezing, an infusion rubber stopper, a vial rubber stopper, a mold release agent, a non-stick light-duty transport belt, an adhesion preventing coating on a pulley gasket of an automobile engine mount, synthetic fiber covering processing, a bolt member or a joint having a packing covering thin layer.

The automobile-related component applications of the formed article of the present disclosure also include an application as components of motorcycles having the same structure.

Examples of the automobile-related fuel include light oil, gasoline, and fuel for diesel engines (including biodiesel fuel).

The formed article can also be used for a sealing material for a rolling bearing.

Examples of the rolling bearing include a ball bearing, a roller bearing, a bearing unit, and a linear bearing.

Examples of the ball bearing include a radial ball bearing, a thrust ball bearing, and a thrust angular contact ball bearing.

Examples of the radial ball bearing include a deep groove ball bearing, an angular contact ball bearing, a four-point contact ball bearing, and a self-aligning ball bearing.

The deep groove ball bearing is used in, for example, electric motors, household electric appliances, and OA equipment.

Examples of the angular contact ball bearing include a single-row angular contact ball bearing, a matched mounting angular contact ball bearing, and a double-row angular contact ball bearing, and the single-row angular contact ball bearing is used in electric motors, household electric appliances and OA equipment, and in hydraulic pumps, vertical pumps, and the like that are subjected to an axial load in addition to a radial load. The matched mounting angular contact ball bearing is used for the main shaft, the grinding spindle, and the like of a machine tool required to have an increased rotational accuracy and rigidity of the shaft. The double-row angular contact ball bearing is used in an electromagnetic clutch for an automobile air conditioner, and the like.

The four-point contact ball bearing is used in, for example, a speed reducer that receives an axial load from both directions and in which a large space for the bearing width is not available.

The self-aligning ball bearing is used in a place where it is difficult to align the shaft and the housing, a power transmission shaft that readily deflects, and the like.

The thrust ball bearing includes a single direction thrust ball bearing and a double direction thrust ball bearing, and the formed article is applicable to conventionally known applications in which such ball bearings are used.

The thrust angular contact ball bearing is used in combination with a double-row cylindrical roller bearing to receive the axial load of the main shaft of a machine tool.

Examples of the roller bearing include a radial roller bearing and a thrust roller bearing.

Examples of the radial roller bearing include a cylindrical roller bearing, a needle roller bearing, a tapered roller bearing, and a self-aligning roller bearing.

The cylindrical roller bearing is used in general machinery, a machine tool, an electric motor, a speed reducer, a train wheel axle, an aircraft, and the like.

The needle roller bearing is used in general machinery, an automobile, and an electric motor, and the like.

The tapered roller bearing is used in a machine tool, a wheel axle for an automobile and a train, a rolling mill, a speed reducer, and the like.

The self-aligning roller bearing is used in general machinery, a rolling mill, a paper making machine, a wheel axle, and the like.

Examples of the thrust roller bearing include a thrust cylindrical roller bearing, a thrust needle roller bearing, a thrust tapered roller bearing, and a thrust self-aligning roller bearing.

The thrust cylindrical roller bearing is used in a machine tool, general machinery, and the like.

The thrust needle roller bearing is used in an automobile, a pump, general machinery, and the like.

The thrust tapered roller bearing is used in general machinery, a rolling mill, and the like.

The thrust self-aligning roller bearing is used in a crane, an extruder, general machinery, and the like.

In addition to being crosslinked and used as a formed article, the fluoroelastomer crosslinkable composition can be used as various components in various industrial fields. Therefore, applications of the fluoroelastomer crosslinkable composition will now be described next.

The fluoroelastomer crosslinkable composition can be used for, for example, surface modifiers for metal, rubber, plastic, glass, and the like; sealing materials and covering materials required to have heat resistance, chemical resistance, oil resistance, and non-stickiness, such as metal gaskets and oil seals; non-stick covering materials for rolls for OA equipment and belts for OA equipment belts, or bleed barriers; and coating woven fabric sheets and belts by impregnation and baking.

The fluoroelastomer crosslinkable composition, by being configured to have high viscosity and high concentration, can be used as a sealing material, a lining, and a sealant having a complex shape by an ordinary method; by being configured to have low viscosity, can be used to form a thin film of several micrometers; and, by being configured to have medium viscosity, can be used to coat a pre-coated metal, an O-ring, a diaphragm, and a reed valve.

Moreover, the fluoroelastomer crosslinkable composition can be used to coat a conveyor roll or belt for a woven fabric or a paper sheet, a printing belt, a chemical resistant tube, a chemical stopper, a fuel hose, and the like.

Examples of usable article substrates to be covered with the fluoroelastomer crosslinkable composition include metals such as iron, stainless steel, copper, aluminum, and brass; glass products such as glass plates, and woven fabrics and non-woven fabrics of glass fiber; formed articles of, and items covered with, general-purpose and heat-resistant resins such as polypropylene, polyoxymethylene, polyimide, polyamideimide, polysulfone, polyethersulfone, and polyether ether ketone; formed articles of, and items covered with, general-purpose rubber such as SBR, butyl rubber, NBR, and EPDM, and heat-resistant rubber such as silicone rubber and fluoroelastomer; and woven fabrics and non-woven fabrics of natural fiber and synthetic fiber.

The covered items formed from the fluoroelastomer crosslinkable composition can be used in fields where heat resistance, solvent resistance, lubricity, and non-stickiness are required, and specific examples of applications include rolls (such as fixing rolls, and crimping rolls) and conveyor belts for OA equipment such as copiers, printers, and facsimiles; sheets and belts; and O-rings, diaphragms, chemical resistant tubes, fuel hoses, valve seals, gaskets for chemical plants, and engine gaskets.

The fluoroelastomer crosslinkable composition can also be used as a coating material or an adhesive by being dissolved in a solvent. The fluoroelastomer crosslinkable composition can also be used as a coating material in the form of an emulsified dispersion (latex).

The fluoroelastomer crosslinkable composition is used as, for example, a sealing material and a lining for various apparatuses, pipes, and the like, and a surface-treating agent for structures made of inorganic and organic substrates such as metal, ceramic, glass, stone, concrete, plastic, rubber, wood, paper, and fiber.

The fluoroelastomer crosslinkable composition can be applied onto a substrate and the like by dispenser coating or screen printing coating.

The fluoroelastomer crosslinkable composition may be used as a coating material composition to cast film or to impregnate a substrate such as fabric, plastic, metal, or an elastomer.

In particular, the fluoroelastomer crosslinkable composition may be used in the form of a latex for producing covered fabric, protective gloves, impregnated fibers, O-ring coverings, covers for fuel system quick connecting O-rings, covers for fuel system seals, covers for fuel tank rollover valve diaphragms, covers for fuel tank pressure sensor diaphragms, covers for oil filter and fuel filter seals, covers for fuel tank sender seals and sender head fitting seals, covers for copier fixing mechanism rolls, and polymer coating material compositions.

They are useful for covering silicone rubber, nitrile rubber, and other elastomers. They are useful also for covering components produced from such elastomers for the purpose of enhancing both the permeation resistance and chemical resistance of the substrate elastomers as well as the thermal stability thereof. Other applications include coverings for heat exchangers, expansion joints, vats, tanks, fans, flue ducts and other conduits, and storage structures such as concrete storage structures. The fluoroelastomer crosslinkable composition may be applied onto the exposed cross-section of a multi-layer component structure in, for example, a method for producing a hose structure and a diaphragm. A sealing member at a connecting part and a joint is often made of a rigid material, and the fluoroelastomer crosslinkable composition provides an improved frictional interface and an enhanced dimensional interference fit, with reduced trace leakage, along the sealing surface. The latex thereof increases seal durability in a variety of automobile system applications.

They can also be used in the production of a power steering system, a fuel system, an air conditioning system, and any joint where a hose and a tube are connected to another component. The fluoroelastomer crosslinkable composition is further useful in the repair of manufacturing defects (and damage resulting from use) in a multi-layer rubber structure such as a three-layer fuel hose. The fluoroelastomer crosslinkable composition is also useful for coating a thin steel sheet that may be formed or embossed before or after a coating material is applied. For example, multiple layers of covered steel can be assembled to form a gasket between two rigid metal members. A sealing effect is obtained by applying the fluoroelastomer crosslinkable composition between the layers. This process can be used to produce an engine head gasket and an exhaust manifold gasket for the purpose of reducing bolt force and strain of assembled components while providing good fuel saving and low emission due to reduced cracks, deflections, and hole strains.

In addition, the fluoroelastomer crosslinkable composition can also be used as a coating agent; a substrate-integrated gasket and packing formed by dispenser forming onto a substrate containing an inorganic material such as metal or ceramic; a multi-layer article obtained by coating onto a substrate containing an inorganic material such as metal or ceramic; and the like.

The fluoroelastomer crosslinkable composition is also suitable as a wiring material for electronic devices that are light and bendable, and can be used in known electronic components. Examples include electronic components such as CMOS electronic circuits, transistors, integrated circuits, organic transistors, light emitting elements, actuators, memories, sensors, coils, capacitors, and resistors. Due to the use thereof, flexible electronic devices can be obtained, such as solar cells, various displays, sensors, actuators, electronic artificial skin, sheet-shaped scanners, braille displays, and wireless power transmission sheets.

Although the embodiments have been described above, it will be understood that various changes in form and details can be made without departing from the gist and scope of the claims.

EXAMPLES

Next, embodiments of the present disclosure will now be described with reference to Examples, but the present disclosure is not limited only to Examples.

Various numerical values in Examples were measured by the following methods.

<Composition of monomers of fluoroelastomer>

Measurements were performed using $^{19}F$-NMR (manufactured by Bruker, AC300P).

<Fluorine content>

The fluorine content was determined by calculation from the composition of the fluoroelastomer measured by $^{19}F$-NMR.

<Mooney viscosity>

The Mooney viscosity was measured according to ASTM D1646-15 and JIS K6300-1:2013. The measurement temperature was 121°C.

<Glass transition temperature (Tg)>

Using a differential scanning calorimeter (manufactured by Mettler Toledo, DSC822e, or manufactured by Hitachi High-Tech Corporation, X-DSC7000), 10 mg of a sample was heated at 20°C/min to obtain a DSC curve, and a temperature indicating an intersection point of an extension of a baseline around the second-order transition of the DSC curve with a tangent of the DSC curve at the inflection point was taken as the glass transition temperature.

<Heat of fusion>

Using a differential scanning calorimeter (manufactured by Mettler Toledo, DSC822e, or manufactured by Hitachi High-Tech Corporation, X-DSC7000), 10 mg of a sample was heated at 20°C/min to obtain a DSC curve, and from the magnitude of a melting peak ($\Delta H$) appearing in the DSC curve, a heat of fusion was calculated.

<Crosslinking characteristics (maximum torque (MH), optimum crosslinking time (T90))>

For a fluoroelastomer crosslinkable composition, in primary crosslinking, a crosslinking curve at a temperature shown in Table 1 was determined by using a vulcanization tester (manufactured by M&K Co., Ltd. MDR H2030), and the maximum torque (MH) and optimum crosslinking time (T90) were determined from the change in the torque.

<M100, tensile strength and elongation at break>

A test piece having a dumbbell No. 6 shape was prepared using a crosslinked sheet of 2 mm in thickness. The 100% modulus (M100), the tensile strength, and the elongation at break at 23°C were measured by using the obtained test piece and a tensile tester (manufactured by A&D Co., Ltd., Tensilon RTG-1310) according to JIS K6251:2010 under the condition of 500 mm/min.

<Hardness>

Three crosslinked sheets of 2 mm in thickness were stacked, and the durometer hardness thereof (type A, peak value, value after 3 seconds) was measured according to JIS K6251-3:2012.

<Heat aging test>

A test piece having a dumbbell No. 6 shape was prepared using a crosslinked sheet of 2 mm in thickness. The obtained test piece was subjected to heat treatment at 275°C for 72 hours, and then the tensile strength of the test piece after the heat treatment was measured by the method described above. Then, the rate of change of the measured value of tensile strength before and after the heat treatment was calculated according to the following formula.

$$\Delta X = (X - X_0) / X_0 \times 100$$

$\Delta X$: Rate of change (%)
$X_0$: Measured value before heat treatment
X: Measured value after heat treatment

The following materials were used in Examples and Comparative Examples.

Fluoroelastomer A:

Molar ratio of vinylidene fluoride/hexafluoropropylene: 78/22
Fluorine content: 66%
Mooney viscosity (ML 1+10 (121°C)): 43
Glass transition temperature: -18°C
Heat of fusion: not observed in second run

MT carbon ($N_2SA$: 8 $m^2/g$, DBP: 43 ml/100 g)

Calcium hydroxide
Magnesium oxide
Crosslinking accelerator A: mixture of 91% by mass of benzyldimethyloctadecylammonium chloride and 9% by mass of isopropyl alcohol

Cross-linking agent-A: 3,6-dihydroxy-9H-xanthen-9-one

Cross-linking agent-B: hydroquinone
Cross-linking agent-C: 2-methylresorcinol
Cross-linking agent-D: bisphenol A
Cross-linking agent-E: 4,4'-dihydroxydiphenyl ether
Cross-linking agent-F: 4,4'-dihydroxybenzophenone
Cross-linking agent-G: bis(4-hydroxyphenyl)sulfone
Cross-linking agent-H: 2,6-dihydroxyanthracene
Cross-linking agent-J: bisphenol AF
Cross-linking agent-I: resorcinol

Examples 1 to 2 and Comparative Examples 1 to 11

Respective components were compounded according to the formulation shown in Tables 1 to 2, and kneaded on an open roll to thereby prepare fluoroelastomer crosslinkable compositions. The maximum torque (MH) and optimum crosslinking time (T90) of the obtained fluoroelastomer crosslinkable compositions are shown in Tables 1 to 2. Next, the obtained fluoroelastomer crosslinkable compositions were crosslinked by primary crosslinking (press crosslinking) under the conditions shown in Tables 1 to 2 and secondary crosslinking (oven crosslinking) under the conditions shown in Tables 1 to 2 to obtain crosslinked sheets (2 mm in thickness) and test pieces used for the heat aging test. The evaluation results and the heat aging test results of the obtained crosslinked sheets are shown in Tables 1 to 2.

[Table 1]

Table 1

| | | | Example 1 | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|---|
| Formulation | Fluoroelastomer A | parts by mass | 100 | 100 | 100 | 100 | 100 | 100 | 100 | 100 | 100 |
| | MT carbon | parts by mass | 20 | 20 | 20 | 20 | 20 | 20 | 20 | 20 | 20 |
| | Calcium hydroxide | parts by mass | 6 | 6 | 6 | 6 | 6 | 6 | 6 | 6 | 6 |
| | Magnesium oxide | parts by mass | 3 | 3 | 3 | 3 | 3 | 3 | 3 | 3 | 3 |
| | Crosslinking accelerator A | parts by mass | 0.7 | 0.7 | 0.7 | 0.7 | 0.7 | 0.7 | 0.7 | 0.7 | 0.7 |
| | Cross-linking agent-A | mmol/100 parts by mass | 6 | | | | | | | | |
| | Cross-linking agent-B | mmol/100 parts by mass | | 6 | | | | | | | |
| | Cross-linking agent-C | mmol/100 parts by mass | | | 6 | | | | | | |
| | Cross-linking agent-D | mmol/100 parts by mass | | | | 6 | | | | | |
| | Cross-linking agent-E | mmol/100 parts by mass | | | | | 6 | | | | |
| | Cross-linking agent-F | mmol/100 parts by mass | | | | | | 6 | | | |
| | Cross-linking agent-G | mmol/100 parts by mass | | | | | | | 6 | | |
| | Cross-linking agent-H | mmol/100 parts by mass | | | | | | | | 6 | |
| | Cross-linking agent-J | mmol/100 parts by mass | | | | | | | | | 6 |
| Crosslinking characteristics | Measurement temperature | | 180°C | 180°C | 180°C | 180°C | 180°C | 180°C | 180°C | 180°C | 180°C |
| | Maximum torque (MH) | dNm | 10.5 | 11.4 | 13.9 | 17.7 | 16.1 | 13.0 | 11.0 | 14.1 | 20.1 |
| | Optimum crosslinking time (T90) | minutes | 11.3 | 3.2 | 1.8 | 3.9 | 2.6 | 6.0 | 8.0 | 3.7 | 3.0 |
| Forming conditions | Primary crosslinking | | 180°C × 20 minutes | 180°C × 20 minutes | 180°C × 20 minutes | 180°C × 20 minutes | 180°C × 20 minutes | 180°C × 20 minutes | 180°C × 20 minutes | 180°C × 20 minutes | 180°C × 20 minutes |
| | Secondary crosslinking | | 230°C × 24 hours | 230°C × 24 hours | 230°C × 24 hours | 230°C × 24 hours | 230°C × 24 hours | 230°C × 24 hours | 230°C × 24 hours | 230°C × 24 hours | 230°C × 24 hours |
| Physical properties | M100 | MPa | 2.7 | 3.2 | 3.5 | 4.0 | 4.0 | 3.4 | 2.5 | 3.8 | 4.6 |
| | Tensile strength | MPa | 12.0 | 7.9 | 11.3 | 12.5 | 12.5 | 12.0 | 12.1 | 14.1 | 15.0 |
| | Elongation at break | % | 310 | 200 | 250 | 230 | 250 | 230 | 340 | 240 | 238 |
| | Hardness (peak) | - | 69 | 70 | 70 | 72 | 70 | 68 | 68 | 68 | 71 |
| | Hardness (after 3 seconds) | - | 63 | 64 | 64 | 67 | 64 | 63 | 62 | 62 | 67 |
| Heat aging test | Rate of change of tensile strength | % | -25 | -40 | -45 | -37 | -45 | -36 | -42 | -38 | -33 |

[Table 2]

Table 2

| | | | Example 2 | Comparative Example 9 | Comparative Example 10 | Comparative Example 11 |
|---|---|---|---|---|---|---|
| Formulation | Fluoroelastomer A | parts by mass | 100 | 100 | 100 | 100 |
| | MT carbon | parts by mass | 20 | 20 | 20 | 20 |
| | Calcium hydroxide | parts by mass | 6 | 6 | 6 | 6 |
| | Magnesium oxide | parts by mass | 3 | 3 | 3 | 3 |
| | Crosslinking accelerator A | parts by mass | 0.7 | 0.7 | 0.7 | 0.7 |
| | Cross-linking agent-A | mmol/100 parts by mass | 12 | | | |
| | Cross-linking agent-D | mmol/100 parts by mass | | 12 | | |
| | Cross-linking agent-H | mmol/100 parts by mass | | | 12 | |
| | Cross-linking agent-I | mmol/100 parts by mass | | | | 12 |
| Crosslinking characteristics | Measurement temperature | | 180°C | 180°C | 180°C | 180°C |
| | Maximum torque (MH) | dNm | 21.1 | 35.0 | 26.2 | 34.1 |
| | Optimum crosslinking time (T90) | minutes | 13.5 | 10.8 | 7.2 | 3.1 |
| Forming conditions | Primary crosslinking | | 180°C × 30 minutes | 180°C × 20 minutes | 180°C × 20 minutes | 180°C × 20 minutes |
| | Secondary crosslinking | | 230°C × 24 hours | 230°C × 24 hours | 230°C × 24 hours | 230°C × 24 hours |
| Physical properties | M100 | MPa | 5.5 | 10.8 | 9.3 | - |
| | Tensile strength | MPa | 14.6 | 17.0 | 16.5 | 10.8 |
| | Elongation at break | % | 190 | 140 | 150 | 100 |
| | Hardness (peak) | - | 72 | 78 | 74 | 76 |
| | Hardness (after 3 seconds) | - | 68 | 75 | 71 | 74 |
| Heat aging test | Rate of change of tensile strength | % | -18 | -24 | -26 | -20 |

## Claims

1. A fluoroelastomer crosslinkable composition comprising: a polyol-crosslinkable fluoroelastomer (a); and a cross-linking agent (b), wherein the cross-linking agent (b) is at least one selected from the group consisting of a compound represented by the following general formula (b) and a salt of the compound with an alkali metal, an alkaline earth metal, or an onium compound.

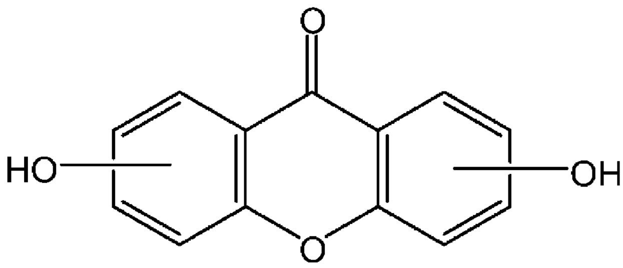

(b)

wherein hydrogen atom bonded to two benzene rings is optionally replaced with any substituent.

2. The fluoroelastomer crosslinkable composition according to claim 1, wherein the fluoroelastomer (a) contains vinylidene fluoride unit.

3. The fluoroelastomer crosslinkable composition according to claim 1 or 2, wherein a content of the cross-linking agent (b) is 0.5 to 50 mmol based on 100 parts by mass of the fluoroelastomer (a).

4. The fluoroelastomer crosslinkable composition according to any one of claims 1 to 3, wherein the cross-linking agent (b) comprises a salt of the compound represented by the general formula (b) with an onium compound, or the fluoroelastomer crosslinkable composition further comprises a crosslinking accelerator (c).

5. The fluoroelastomer crosslinkable composition according to any one of claims 1 to 4, further comprising 0.1 to 50 parts by mass of an acid acceptor (d) based on 100 parts by mass of the fluoroelastomer (a).

6. The fluoroelastomer crosslinkable composition according to any one of claims 1 to 5, further comprising at least one acid acceptor (d) selected from the group consisting of a metal oxide, a metal hydroxide, an alkali metal silicate, a metal salt of a weak acid, and a hydrotalcite.

7. The fluoroelastomer crosslinkable composition according to any one of claims 1 to 6, wherein the cross-linking agent (b) is at least one selected from the group consisting of a compound represented by the following general formula (b1) and a salt of the compound represented by the general formula (b1) with an alkali metal, an alkaline earth metal, or an onium compound.

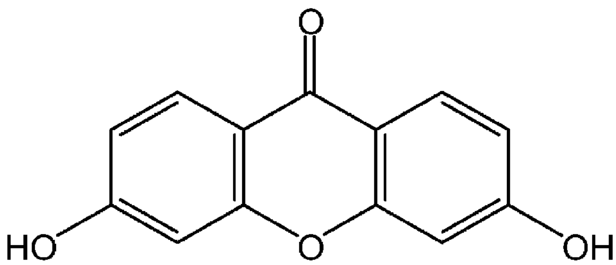

(b1)

8. The fluoroelastomer crosslinkable composition according to any one of claims 1 to 7, used for forming a sealing material.

9. A formed article obtained from the fluoroelastomer crosslinkable composition according to any one of claims 1 to 8.

10. A sealing material obtained from the fluoroelastomer crosslinkable composition according to any one of claims 1 to 8.

## INTERNATIONAL SEARCH REPORT

International application No.
**PCT/JP2022/022642**

**A. CLASSIFICATION OF SUBJECT MATTER**

***C08L 27/12***(2006.01)i; ***C08K 5/1545***(2006.01)i; ***C09K 3/10***(2006.01)i
FI: C08L27/12; C08K5/1545; C09K3/10 M

According to International Patent Classification (IPC) or to both national classification and IPC

**B. FIELDS SEARCHED**

Minimum documentation searched (classification system followed by classification symbols)

C08L1/00-101/16; C08K3/00-13/08; C09K3/10

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | JP 56-501323 A (MINNESOTA MINING AND MANUFACTURING CO.) 17 September 1981 (1981-09-17) | 1-10 |
| P, A | WO 2022/059575 A1 (DAIKIN INDUSTRIES, LTD.) 24 March 2022 (2022-03-24) | 1-10 |
| P, A | WO 2022/059576 A1 (DAIKIN INDUSTRIES, LTD.) 24 March 2022 (2022-03-24) | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 August 2022** | **23 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/022642**

| Patent document cited in search report | Publication date (day/month/year) | Patent family member(s) | Publication date (day/month/year) |
|---|---|---|---|
| JP 56-501323 A | 17 September 1981 | US 4293663 A | |
| | | US 4287322 A | |
| | | US 4343861 A | |
| | | WO 1981/001150 A1 | |
| WO 2022/059575 A1 | 24 March 2022 | (Family: none) | |
| WO 2022/059576 A1 | 24 March 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 64000418 A
- JP 60215042 A
- JP 59105046 A
- JP 63268757 A
- JP 59206451 A
- WO 2002092683 A
- JP 2003277563 A
- WO 2018527449 A
- JP 7316377 A
- JP 5063482 A
- JP 7316234 A
- JP 4217936 A
- JP 61055138 A
- JP 4505341 A
- JP 4505345 A
- JP 5500070 A
- JP 8012726 A
- JP 60044511 A
- JP 3890630 B
- WO 2011522921 A, PCT
- WO 2012023485 A